(19) Europäisches Patentamt
European Patent Office
Office européen des brevets

(11) **EP 2 511 523 A1**

(12) **EUROPÄISCHE PATENTANMELDUNG**

(43) Veröffentlichungstag:
**17.10.2012   Patentblatt 2012/42**

(51) Int Cl.:
***F03D 11/00*** *(2006.01)*

(21) Anmeldenummer: **11003034.3**

(22) Anmeldetag: **11.04.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Baumer Innotec AG**
**8500 Frauenfeld (CH)**

(72) Erfinder: **Weigel, Michael**
**88142 Wasserburg (DE)**

(74) Vertreter: **Strauss, Steffen**
**Baumer Innotec AG**
**Hummelstrasse 17**
**8500 Frauenfeld (CH)**

(54) **Windkraftanlage mit Einrichtung zur Messung des Abstands zwischen Rotorblatt und Turm sowie Verfahren zur Abstandsmessung**

(57)   Windkraftanlage mit einem Turm und zumindest einem Rotorblatt, umfassend zumindest einen am Turm angeordneten Distanzmesser zur Überwachung des Abstandes zwischen Rotorblatt und Turm. Weiter betrifft die Erfindung ein Verfahren zur Messung des Abstands zwischen dem Turm einer Windkraftanlage und dem Rotorblatt, insbesondere dessen Flügelspitze.

Fig. 1

**Beschreibung**

Gebiet der Erfindung

Die Erfindung betrifft eine Windkraftanlage mit einer Einrichtung zur Messung des Abstands zwischen dem Rotorblatt und dem Turm der Windkraftanlage. Weiter betrifft die Erfindung ein Verfahren zur Messung des Abstands zwischen dem Turm einer Windkraftanlage und dem Rotorblatt, insbesondere dessen Flügelspitze.

Hintergrund der Erfindung

Bei Windkraftanlagen besteht die Tendenz, immer größere Anlagen mit demzufolge immer größer werdenden Rotorblättern zu bauen. Eine derartige Windkraftanlage besteht in der Regel aus einem Turm, auf welchem eine drehbare Gondel angeordnet ist. In der Gondel befindet sich in der Regel der Generator, mit dem Strom erzeugt wird. Über die drehbare Gondel kann der an der Gondel angeordnete Rotor der Windrichtung nachgeführt werden. Unter anderem zur Anpassung an unterschiedliche Windgeschwindigkeiten sind die Rotorblätter des Rotorblatts in der Regel in ihrem Anstellwinkel verstellbar.

Die Rotorblätter bestehen insbesondere bei größeren Windkraftanlagen aus Faserverbundwerkstoffen. Derartige Faserverbundwerkstoffe sind biegelastisch. Da die Belastungstests in der Regel statisch durchgeführt werden, muss in der Praxis ein relativ hoher Sicherheitsfaktor in die Auslegung eines Rotorblatts eingehen.

Auf der anderen Seite kann aufgrund der großen Biegeelastizität der verwendeten Verbundwerkstoffe die Elastizität sogar verwendet werden, um die Materialbelastung zu verringern. So können beispielsweise Lastspitzen etwa aufgrund von Böen weicher abgefangen werden. Problematisch ist dabei aber, dass bei hoher Windlast die Gefahr besteht, dass die Spitze des Rotorblatts gegen den Turm stößt, wodurch die Anlage schwer beschädigt oder zerstört werden kann.

Um die Verformung bzw. Durchbiegung des Rotorblatts zu bestimmen, werden in der Praxis beispielsweise Dehnmessstreifen verwendet, welche am Rotorblatt angebracht sind und über die sich die Verformung des Rotorblatts messen lässt.

Nachteilig an diesen Systemen ist, dass anhand der so gemessenen Verformung meist nur unzureichend auf den genauen Abstand der Rotorblattspitze zum Turm geschlossen werden kann.

Aufgabe der Erfindung

Der Erfindung liegt dem gegenüber die Aufgabe zugrunde, die genannten Nachteile des Standes der Technik zumindest zu reduzieren.

Es ist insbesondere eine Aufgabe der Erfindung, die Sicherheit der Windkraftanlage zu verbessern.

Zusammenfassung der Erfindung

Die Aufgabe der Erfindung wird bereits durch eine Windkraftanlage sowie durch ein Verfahren zur Messung des Abstands eines Rotorblatts vom Turm einer Windkraftanlage nach einem der unabhängigen Ansprüche gelöst. bevorzugte Ausführungsformen und Weiterbildungen der Erfindung sind den jeweiligen Unteransprüchen zu entnehmen.

Die Erfindung betrifft eine Windkraftanlage mit einem Rotor, der wenigstens ein Rotorblatt umfasst. Typischerweise weisen Rotoren von Windkraftanlagen drei Rotorblätter auf. Die Erfindung kann aber für Windkraftanlagen mit einer beliebigen Anzahl an Rotorblättern verwendet werden.

Der Rotor mit dem Rotorblatt ist in der Regel an einer Gondel angeordnet, welche auf einem Turm sitzt.

Gemäß der Erfindung ist am Turm zumindest ein Distanzmesser angeordnet, über welchem der Abstand zwischen Rotorblatt und Turm überwacht werden kann.

Unter Überwachung des Abstands wird auch die bloße Messung des Abstands verstanden. Der gewonnene Messwert kann direkt oder indirekt zur Steuerung der Windkraftanlage verwendet werden. Insbesondere kann der Messwert dazu dienen, den Anstellwinkel des Rotorblatts zu regeln, ein Alarmsignal bei Unterschreitung eines vorgegebenen Mindestabstands des Rotorblattes zum Turm zu generieren oder eine Notabschaltung einzuleiten, falls die Gefahr besteht, dass das Rotorblatt mit dem Turm in Berührung kommt.

Im Unterschied zu einem am Rotorblatt selbst angeordneten Messsystem, ist es über einen am Turm angeordneten Distanzmesser möglich, den Abstand des vorbei laufenden Rotorblatts auf einfache Weise direkt zu messen.

Vorzugsweise wird hierzu eine Laufzeitmessung verwendet. Insbesondere kann die Laufzeit eines vom Distanzmesser ausgehenden Lichtsignals gemessen werden. Hierzu eignet sich beispielsweise bekannte Licht-Laufzeit Messverfahren, beispielsweise LIDAR-oder optische TOF- Systeme.

Aber auch andere Messverfahren, etwa Ultraschall oder Radar, sind theoretisch denkbar.

Bei einer Weiterbildung der Erfindung sind am Turm mehrere, über den Umfang des Turms verteilte Distanzmesser angeordnet. So ist es auf einfache Weise möglich, der Drehung der Gondel entsprechend der Windrichtung zu folgen. Vorzugsweise wird der Abstand des Rotorblatts zum Turm bzw. zu dessen Mittelpunkt über das Messsignal von zumindest zwei Distanzmessern ermittelt.

Alternativ ist bei einer einfachen Variante auch denkbar, den absoluten Abstand zum nächsten Distanzmesser als Maß für den Abstand des vorbei streichenden

Rotorblatts zu verwenden. Diese Ausführungsform ist regelungstechnisch einfacher, lässt aber keine so genauen Messungen zu.

Alternativ bietet es sich an, nur einen Distanzmesser zu verwenden. Der Distanzmesser ist hierbei entlang des Umfangs verschiebbar. Entsprechend der Drehrichtung der Gondel wird der Distanzmesser verschoben. Bei dieser Variante ist zwar nur ein Distanzmesser erforderlich, der mechanische und regelungstechnische Aufwand ist aber zumeist höher und das System empfindlicher als dies bei der vorstehenden Variante mit mehreren Distanzmessern der Fall ist.

Sofern mehrere Distanzmesser verwendet werden, sind diese vorzugsweise in Reihe geschaltet, insbesondere in Form einer Daisy-Chain. Über ein entlang einer Kette laufendes Signal kann insbesondere unter Berücksichtigung des Messsignals von zumindest zwei hintereinander angeordneten Distanzmessern eine einfache und genaue Messung des Abstands des Rotorblatts vom Turm erfolgen.

Der zumindest eine Distanzmesser bzw. der Kranz von Distanzmessern bei Verwendung von mehreren Distanzmessern ist vorzugsweise in etwa auf Höhe einer Spitze des Rotorblatts bezogen auf einen Durchlauf des Rotorblatts am Turm angeordnet.

Es versteht sich, dass die Messung immer genau dann vorgenommen wird, wenn die Flügelspitze am Turm vorbeiläuft, also ihren tiefsten Punkt erreicht. Insbesondere bei Verwendung eines Lichtsignals ist vorzugsweise am Rotorblatt ein Reflektor angeordnet. Der Reflektor kann vorzugsweise als Retroreflektorstreifen ausgebildet sein und am Rotorblatt aufgeklebt sein.

Dieser sollte so lang und so breit sein, dass auch bei unterschiedlichen Anstellwinkeln des Rotorblatts und unterschiedlichen Durchbiegungsgraden ein stabiles Messsignal erzeugt werden kann.

Um eine genaue Messung des Abstands vornehmen zu können, kann, sofern das Rotorblatt nicht direkt gegenüber einem Distanzmesser vorbeiläuft, das Signal von mindestens zwei Distanzmessern ausgewertet werden. Gemäß einer bevorzugten Ausführungsform sind daher am Turm zumindest zwei, vorzugsweise zumindest fünf und besonders bevorzugt zumindest acht Distanzmesser angeordnet. Bei ausreichender Anzahl von Distanzmessern kann ggf. auch auf eine Berechnung des Abstands anhand einer im Ausführungsbeispiel dargestellten Vektorrechnung verzichtet werden.

Die Erfindung betrifft des Weiteren ein Verfahren zum Messen des Abstands eines Rotorblatts vom Turm einer Windkraftanlage, wobei über eine Mehrzahl von über den Umfang des Turms verteilten Distanzmessern der Abstand bestimmt wird. Insbesondere ist ein Kranz an um den Umfang des Turms verteilten Distanzmessern vorgesehen.

Vorzugsweise wird der Abstand anhand von Laufzeitsignalen von zumindest zwei benachbart angeordneten Distanzmessern gemessen. Die Distanzmesser senden dabei ein Signal, insbesondere ein Lichtsignal aus, welches vom Rotorblatt, insbesondere von der Rotorblattspitze reflektiert wird. Anhand der Laufzeit kann der genaue Abstand des Rotorblatts zum Distanzmesser bestimmt werden.

Da nun der genaue Ort der beiden Distanzmesser bekannt ist, kann über eine im Ausführungsbeispiel dargestellten Vektorrechnung der genaue Abstand des Rotorblatts zum Turm errechnet werden.

Gleichermaßen kann so auch der Ort des Rotorblatts beim Vorbeistreifen bestimmt werden und so auch der Winkel, welchen die Gondel zum Turm einnimmt, bestimmt werden. Mit dem erfindungsgemäßen Verfahren ist ohne zusätzliche elektronische oder mechanische Komponenten daher zugleich auch möglich, die Drehrichtung der Gondel zu bestimmen. Diese Richtung kann beispielsweise von nachfolgenden Einheiten weiterverarbeitet werden, etwa um zu überprüfen, ob die Gondel auch wie gewünscht zum Wind ausgerichtet ist.

Bei einer bevorzugten Ausführungsform durchlaufen die Messsignale Distanzmesser, welche in Reihe angeordnet sind, insbesondere in Form eines Daisy-Chain-Verfahrens.

Über das Daisy-Chain-Verfahren kann insbesondere auf sehr einfache Weise von einem der Distanzmesser der genaue Abstand errechnet werden. Dabei durchläuft beispielsweise ein Signal die Kette von Distanzmessern und es wird von dem Distanzmesser, welcher zuerst ein gültiges Messsignal empfängt, beispielsweise ein Datum hochgezählt, welches dem Messsignal angehängt wird.

Der in der Kette folgende Distanzmesser erhält nun den Abstand des vorherigen Distanzmessers und weiß aufgrund des hochgezählten Datums, dass ein gültiges Messsignal vorliegt. Auf Basis dieser Angaben kann der Distanzmesser, sofern er selbst ein gültiges Messergebnis erhält, den genauen Abstand errechnen und weiterleiten. Es versteht sich, dass im Sinne der Erfindung die Berechnung nicht mittels einer Schaltung innerhalb des Distanzmessers vorgenommen werden muss, sondern dass sich diese Logik an beliebiger Stelle der Anlage befinden kann.

Über die gemessene Distanz können beispielsweise Alarm- oder Warnschwellen definiert werden.

Weiter kann anhand des gemessenen Signals der Anstellwinkel des Rotorblatts geregelt werden und/oder eine Notabschaltung vorgenommen werden.

Bei einer bevorzugten Ausführungsform der Erfindung kommunizieren die Distanzmesser über einen Datenbus, insbesondere können bekannte Bussysteme und Sensoren, welche als Teilnehmer geschaltet werden können, verwendet werden. Der Aufwand für die Hardware, welche zur Ausführung des erfindungsgemäßen Verfahrens benötigt wird, ist daher überschaubar.

Bei einer Weiterbildung der Erfindung wird die Konfiguration des Datenbusses automatisch an die Drehrichtung des Rotors angepasst. So kann beispielsweise eine Zuweisung der Reihenfolge der Distanzmesser derart erfolgen, dass sich die Reihenfolge, welcher Distanzmesser als erster eine Messung vornimmt, mit der Drehrichtung des Rotors ändert.

Beschreibung der Zeichnungen

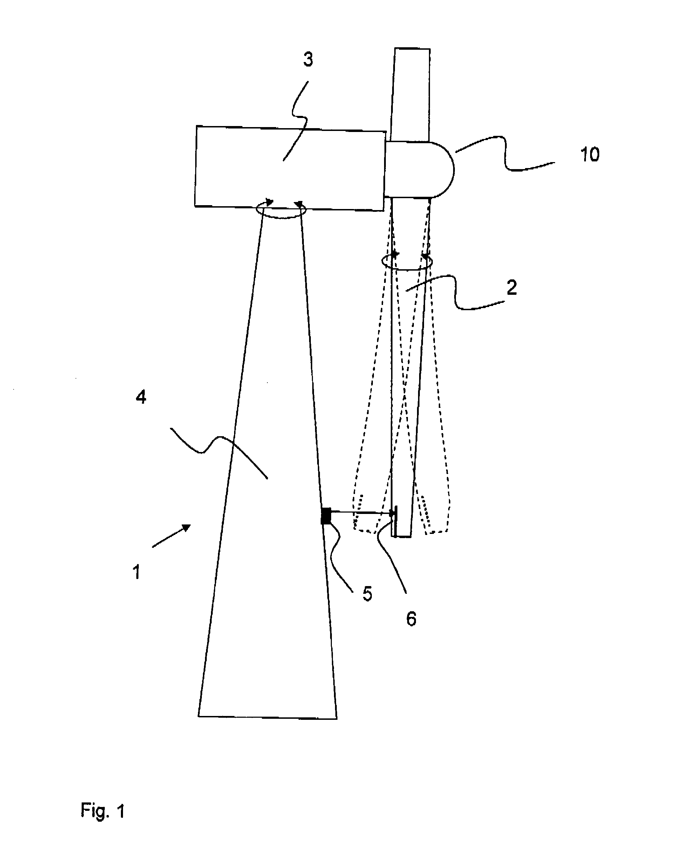

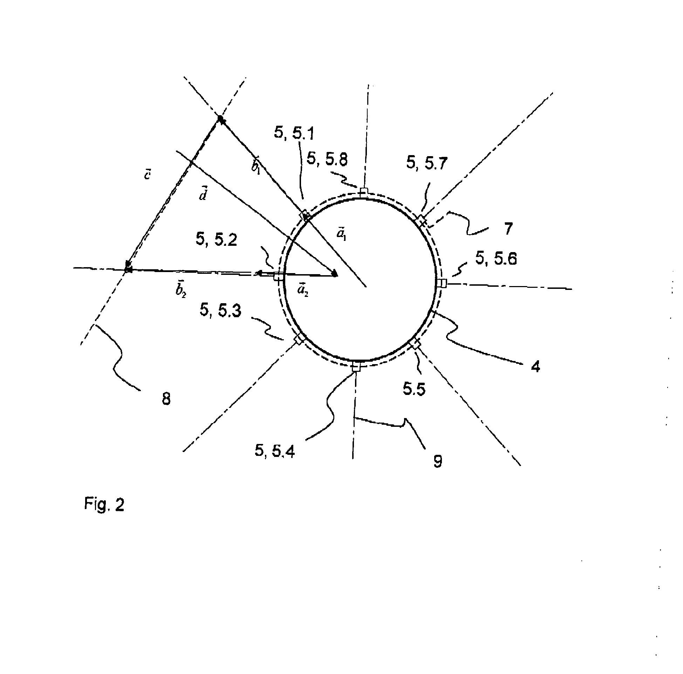

Die Erfindung soll im Folgenden anhand eines schematisch dargestellten Ausführungsbeispiels Bezug nehmend auf die Zeichnungen Fig. 1 und Fig. 2 näher erläutert werden.

Fig. 1 zeigt eine schematische Darstellung einer Windkraftanlage 1. Die Windkraftanlage 1 umfasst einen Turm 4, auf dem eine drehbare Gondel 3 angeordnet ist. An der Gondel 3 ist ein Rotor 10 mit wenigstens einem Rotorblatt 2 befestigt. Der Anstellwinkel des Rotorblatts 2, auch als Pitchwinkel bezeichnet, ist veränderbar, um sich wechselnden Windlasten anzupassen.

Gemäß der Erfindung ist am Turm 4 zumindest ein Distanzmesser 5 befestigt, welcher auf die Spitze des Rotorblatts 2 ausgerichtet ist. Bei dem Distanzmesser 5 handelt es sich vorzugsweise um eine optische Messeinrichtung, insbesondere um einen LIDAR oder TOF Distanzmesser.

Um ein stabiles Messsignal zu erhalten, ist an der Spitze des Rotorblatts 2 ein Reflektor 6, hier in Form eines aufgeklebten Retroreflektorstreifens vorgesehen. Anhand des Laufzeitsignals kann der Abstand vom Rotorblatt 2 zum Turm 4 mit hoher Genauigkeit gemessen werden.

Die Positionen des Rotorblatts 2 bei verschiedenen Belastungen sind mit gestrichelten Linien eingezeichnet. Der Reflektor 6 sollte so beschaffen sein, dass auch in allen Belastungszuständen und verschiedenen Anstellwinkeln ein stabiles Messsignal generiert werden kann.

In dieser Ansicht ist nur ein Distanzmesser 5 dargestellt. Vorzugsweise umfasst das erfindungsgemäße System aber einen Kranz von Distanzmessern 5, um dem Rotorblatt 2 bei sich änderndem Drehwinkel der Gondel 3 folgen zu können.

Ein derartiger Kranz von Distanzmessern 5 ist in Fig. 2 dargestellt.

Zu sehen ist eine Schnittansicht des Turmes 4, um dessen Umfang herum in diesem Ausführungsbeispiel 8 Distanzmesser 5 in einem Winkel von jeweils 45 Grad verteilt angeordnet sind. Die Distanzmesser 5 sind mit 5.1 bis 5.8 beschriftet.

Die Distanzmesser 5.1 bis 5.8 sind in Reihe geschaltet und über eine Schnittstelle 7 mit externen Einheiten, beispielsweise der Steuerung der Windkraftanlage 1 (nicht dargestellt) verbunden.

Anhand der eingezeichneten Vektoren soll die Berechnung des Abstands des Rotorblatts 2 zum Turm 4 näher erläutert werden.

Die gestrichelte Linie 9 zeigt beispielhaft den Messvektor eines Distanzmessers 5.1 bis 5.8. Die gestrichelte Linie 8 zeigt die Trajektorie 8 des vorbeistreifenden Rotorblatts 2. Die Vektoren $\overline{a}_1$, und $\overline{a}_2$ 2 legen den Ort, an dem hier die Distanzmesser 5.1 und 5.2 angeordnet sind, fest. Abstand und Richtung des vorbeistreifenden Rotorblatts 2 von den Distanzmessern 5.1 und 5.2 werden durch die Vektoren $\overline{b}_1$ und $\overline{b}_2$ wiedergegeben. Der Vektor $\overline{d}$, dessen Betrag dem Abstand des vorbeistreifenden Rotorblatts 2 zum Mittelpunkt des Turms 4 entspricht, kann wie folgt berechnet werden:

$$\vec{d} = (\vec{r_1} - \vec{r_0}) - \frac{(\vec{r_1} - \vec{r_0}) \cdot \vec{V}}{\left|\vec{V}\right|^2} \vec{V}$$

$$d = \frac{\left|(\vec{r_1} - \vec{r_0}) \times \vec{V}\right|}{\left|\vec{V}\right|}$$

wobei gilt:

$$\vec{r_1} = \begin{pmatrix} 0 \\ 0 \end{pmatrix}$$

$$\vec{r_0} = \vec{a_1} + \vec{b_1}$$

$$\vec{V} = \vec{c} \approx (\vec{a_2} + \vec{b_2}) - (\vec{a_1} + \vec{b_1})$$

Der Abstand A des Rotorblatts 2 zum Turm 4 lässt sich unter Kenntnis des Turmradius R an dieser Stelle und aus der Distanz d ermitteln: A = d - R

Die Distanzmesser 5.1 bis 5.8 sind vorzugsweise als Daisy-Chain miteinander verbunden. Die Distanzmesser 5.1 bis 5.8 sind dabei in einer Kette jeweils mit dem vorangehenden Distanzmesser 5.1 bis 5.8 verbunden und jeder Teilnehmer in dieser Kette misst kontinuierlich die Distanz.

Sobald eine gültige Distanz beim Vorbeistreifen des Rotorblatts 2 an einem Distanzmesser 5.1 bis 5.8 gemessen wird, wird diese mit einem Zeitstempel versehen.

Die als Teilnehmer der Daisy-Chain agierenden Distanzmesser 5.1 bis 5.8 verständigen sich auf und synchronisieren sich auf eine gemeinsame Zeitbasis. Der erste Teilnehmer in einer Sequenz, welcher eine Distanzmessung realisiert, ohne vorher selbst Daten von einem Teilnehmer vor ihm in der Kette erhalten zu haben, kann beispielsweise die Datenpaketnummer 1, den Vektor $\overline{b}_n$ welcher die Distanz enthält, den Vektor $\overline{a}_n$ und den Zeitstempel an den nächsten Teilnehmer der Daisy-Chain senden.

Jeder weitere Teilnehmer erhöht nun die Datenpaketnummer um 1 und wartet seinerseits auf eine Distanzmessung. Als Abbruchkriterium kann beispielsweise die gültige Messung eines weiteren Teilnehmers verwendet werden. Wenn ein solches Abbruchkriterium erfüllt wird, ermittelt der Teilnehmer, der dieses Kriterium erkannt hat, den Abstand des Rotorblatts 2 zum Turm 4 und schickt ein so gekennzeichnetes Datenpaket in die Daisy-Chain.

Einer der Teilnehmer kann die Distanz an ein übergeordnetes System, wie beispielsweise die Steuerungseinrichtung der Windkraftanlage 1, weiterleiten. Statt der Distanz können auch Warn- und Alarmschwellen überprüft und eine entsprechende Warnung oder ein Alarm an das System kommuniziert werden. Wenn eine Distanzmessung ausgeführt wurde und das Ergebnis übertragen wurde, wird die Daisy-Chain über einen Resetbefehl in einen Grundzustand versetzt, so dass erneut eine Messung vorgenommen werden kann.

Als Abbruchkriterium bei diesem Messverfahren kommen beispielsweise in Betracht:

- die Datenpaketnummer ist größer oder gleich 8-1 (bei Verwendung von acht Distanzmessern 5.1 bis 5.8),
- die Datenpaketnummer hat eine vorher definierte Zahl erreicht, beispielsweise 2,
- es kommt zu einem Time-out, bei welchem es nur eine gültige Messung gibt, ohne dass innerhalb eines parametrierbaren oder nachgeführten Time-out-Werts ein weiteres Ereignis bei dem Teilnehmer auftritt, der ein Datenpaket erhalten hat.

Der Teilnehmer, welcher so konfiguriert ist, dass er die Distanz oder Warn- bzw. Alarmmeldungen an ein übergeordnetes System weiterleitet, ist ebenfalls einem Time-out zugeordnet. Wenn innerhalb eines festgelegten Zeitraums oder auch nach einem nachgeführten Time-out kein Ergebnis zur Auswertung gelangt, kann dies ebenfalls an ein übergeordnetes System kommuniziert werden und beispielsweise eine Fehlermeldung ausgeführt werden.

Die nachgeführten Time-out-Werte können beispielsweise mit einer Liste der vergangenen Ereigniszeitabstände unter Anwendung eines Filters und eines konstanten Zeitoffsets ermittelt werden.

Ober die Distanzmesser 5.1 bis 5.8, mit denen eine Messung durchgeführt wurde, ist es auch möglich, die Drehrichtung der Gondel 3 zu bestimmen.

Die Distanzmesser 5.1 bis 5.8 können beispielsweise an ein Bussystem angeschlossen sein, welches über die Schnittstelle 7 an ein übergeordnetes

System angeschlossen ist. Alternativ hierzu können die Distanzmesser 5.1 bis 5.8 auch drahtlos miteinander kommunizieren.

Falls die Drehrichtung des Rotors 10 sich ändert, ist es möglich, eine automatische Neuzuweisung durchzuführen. Dies kann beispielsweise im Falle eines Bussystems im Protokoll verhandelt werden, im Falle einer Voll-Duplex-Übertragung kann dies durch die Umdefinition von Sendekanal und Empfangskanal erfolgen.

Grundsätzlich können für die Erfindung alle Arten von Bussystemen verwendet werden.

Durch die Erfindung konnte eine einfache und genaue Messung des Abstands eines Rotorblatts 2 zum Turm 4 einer Windkraftanlage 1 realisiert werden.

**Patentansprüche**

1.  Windkraftanlage mit einem Turm (4) und zumindest einem Rotorblatt (2), umfassend zumindest einen am Turm (4) angeordneten Distanzmesser (5) zur Überwachung des Abstandes zwischen Rotorblatt und Turm (4).

2.  Windkraftanlage nach dem vorstehenden Anspruch, **dadurch gekennzeichnet, dass** der zumindest eine Distanzmesser (5) eine Laufzeitmessung ausführt, insbesondere eine Laufzeitmessung eines Lichtsignals.

3.  Windkraftanlage nach einem der vorstehenden Ansprüche, **dadurch gekennzeichnet, dass** am Turm(4) mehrere über den Umfang des Turms (4) verteile Distanzmesser (5) angeordnet sind.

4.  Windkraftanlage nach dem vorstehenden Anspruch, **dadurch gekennzeichnet, dass** die Distanzmesser (5) in Reihe geschaltet sind, insbesondere als Daisy-Chain.

5.  Windkraftanlage nach einem der vorstehenden Ansprüche, **dadurch gekennzeichnet, dass** der zumindest eine Distanzmesser (5) in etwa auf Höhe einer Spitze des Rotorblatts (2) bezogen auf einen Durchlauf des Rotorblatts (2) am Turm(4)angeordnet ist.

6.  Windkraftanlage nach einem der vorstehenden Ansprüche, **dadurch gekennzeichnet, dass** am Rotorblatt (2), insbesondere an dessen Flügelspitze, ein Reflektor (6), insbesondere ein aufgeklebter Retroreflektorstreifen angeordnet ist.

7.  Windkraftanlage nach einem der vorstehenden Ansprüche, **dadurch gekennzeichnet, dass** am Turm (4) zumindest zwei, vorzugsweise zumindest fünf, besonders bevorzugt zumindest acht Distanzmesser (5) angeordnet sind.

8.  Verfahren zum Messen des Abstands eines Rotorblatts (2) vom Turm (4) einer Windkraftanlage (1), bei dem über eine Mehrzahl von am Umfang des Turms (4) verteilen Distanzmessern (5) der Abstand bestimmt wird.

9.  Verfahren zur Messung des Abstands eines Rotorblatts (2) nach dem vorstehenden Anspruch, **dadurch gekennzeichnet, dass** der Abstand anhand von Laufzeitsignalen von zumindest zwei benachbart angeordneten Distanzmessern (5) gemessen wird.

10. Verfahren zur Messung des Abstands eines Rotorblatts (2) nach einem der vorstehenden Ansprüche, **dadurch gekennzeichnet, dass** über eine Bestimmung an welchen Distanzmessern (5) ein Abstandssignal gemessen wird, die Drehrichtung einer Gondel (3) der Windkraftanlage (1) bestimmt wird.

11. Verfahren zur Messung des Abstands eines Rotorblatts (2) nach einem der vorstehenden Ansprüche, **dadurch gekennzeichnet, dass** die Messsignale die Distanzmesser (5) durchlaufen, insbesondere in Form eines Daisy-Chain-Verfahrens.

12. Verfahren zur Messung des Abstands eines Rotorblatts (2) nach dem vorstehenden Anspruch, dass ein Distanzmesser (5), der ein gültiges Abstandssignal von einem vor ihm angeordneten Distanzmesser (5) empfängt, auf Basis des empfangenen Messsignals und eines eigenen Messsignals den Abstand des Rotorblatts (2) vom Turm (4) bestimmt.

13. Verfahren zur Messung des Abstands eines Rotorblatts (2) nach einem der vorstehenden Ansprüche, **dadurch gekennzeichnet, dass** über die gemessene Distanz Warn- und/oder Alarmschwellen definiert werden.

14. Verfahren zur Messung des Abstands eines Rotorblatts (2) nach einem der vorstehenden Ansprüche, **dadurch**

**gekennzeichnet, dass** die Distanzmesser (5) über einen Datenbus kommunizieren.

15. Verfahren zur Messung des Abstands eines Rotorblatts nach dem vorstehenden Anspruch, **dadurch gekennzeichnet, dass** die Konfiguration des Datenbusses automatisch an die Drehrichtung des Rotorblatts (2) angepasst wird.

Fig. 1

Fig. 2

**EP 2 511 523 A1**

Europäisches Patentamt
European Patent Office
Office européen des brevets

# EUROPÄISCHER RECHERCHENBERICHT

Nummer der Anmeldung

EP 11 00 3034

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2006 054667 A1 (LUCKS CHRISTOPH [DE] WINDCOMP GMBH [DE]) 21. Mai 2008 (2008-05-21) * Zusammenfassung * * Abbildung 1 * * Absätze [0001], [0009], [0010], [0013], [0015], [0016], [0018] - [0025], [0033] - [0035] * ----- | 1-15 | INV. F03D11/00 |
| X | EP 1 772 622 A1 (DAUBNER & STOMMEL GBR BAU WERK [DE]) 11. April 2007 (2007-04-11) * Zusammenfassung * * Abbildung 1 * * Absätze [0002] - [0014], [0021], [0024], [0026], [0027] * ----- | 1-3,5-8, 13 | |
| X | DE 100 32 314 C1 (WOBBEN ALOYS [DE]) 13. Dezember 2001 (2001-12-13) * Abbildungen 1-2 * * Seiten 1,14-16 * ----- | 1-3,5-8, 13 | |
| X | US 2004/057828 A1 (BOSCHE JOHN VANDEN [US]) 25. März 2004 (2004-03-25) * Zusammenfassung * * Abbildungen 1-2 * * Absätze [0004], [0005], [0007], [0012], [0018], [0020] * ----- | 1-3,5-8, 13 | RECHERCHIERTE SACHGEBIETE (IPC) F03D G01B |
| A | GB 2 440 953 A (INSENSYS LTD [GB]) 20. Februar 2008 (2008-02-20) * Zusammenfassung * * Abbildungen 1-3 * * Seite 6, Zeile 32 - Seite 7, Zeile 29 * ----- | 4,11 | |

Der vorliegende Recherchenbericht wurde für alle Patentansprüche erstellt

| Recherchenort | Abschlußdatum der Recherche | Prüfer |
|---|---|---|
| Den Haag | 31. August 2011 | Rakotonanahary, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................
& : Mitglied der gleichen Patentfamilie, übereinstimmendes Dokument

EPO FORM 1503 03.82 (P04C03)

10

**ANHANG ZUM EUROPÄISCHEN RECHERCHENBERICHT**
**ÜBER DIE EUROPÄISCHE PATENTANMELDUNG NR.**                    EP 11 00 3034

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-08-2011

| Im Recherchenbericht angeführtes Patentdokument | Datum der Veröffentlichung | Mitglied(er) der Patentfamilie | Datum der Veröffentlichung |
|---|---|---|---|
| DE 102006054667 A1 | 21-05-2008 | CN 101622447 A<br>EP 1994280 A2<br>WO 2008058876 A2<br>US 2010084864 A1 | 06-01-2010<br>26-11-2008<br>22-05-2008<br>08-04-2010 |
| EP 1772622 A1 | 11-04-2007 | AU 2006225310 A1<br>CA 2562600 A1<br>DE 102005048805 A1<br>US 2007102939 A1 | 26-04-2007<br>10-04-2007<br>12-04-2007<br>10-05-2007 |
| DE 10032314 C1 | 13-12-2001 | AT 376622 T<br>AU 6226401 A<br>AU 2001262264 B2<br>BR 0112171 A<br>CA 2414645 A1<br>DK 1301707 T3<br>WO 0202936 A1<br>EP 1301707 A1<br>ES 2293995 T3<br>JP 4070595 B2<br>JP 2004502091 A<br>PT 1301707 E<br>US 2004013524 A1 | 15-11-2007<br>14-01-2002<br>13-01-2005<br>06-05-2003<br>30-12-2002<br>28-01-2008<br>10-01-2002<br>16-04-2003<br>01-04-2008<br>02-04-2008<br>22-01-2004<br>08-11-2007<br>22-01-2004 |
| US 2004057828 A1 | 25-03-2004 | US 2008101930 A1 | 01-05-2008 |
| GB 2440953 A | 20-02-2008 | CA 2661068 A1<br>EP 2052152 A1<br>WO 2008020239 A1<br>US 2010209248 A1 | 21-02-2008<br>29-04-2009<br>21-02-2008<br>19-08-2010 |

EPO FORM P0461

Für nähere Einzelheiten zu diesem Anhang : siehe Amtsblatt des Europäischen Patentamts, Nr.12/82